# EUROPEAN PATENT SPECIFICATION

(11) **EP 4 304 250 B1**
(45) Date of publication and mention of the grant of the patent: **24.12.2025**
(21) Application number: 23208186.9
(22) Date of filing: 05.05.2021
(51) Int. Cl.: H04W 4/50, H04W 36/12, H04W 40/36

(54) **COMMUNICATION NETWORK ARRANGEMENT AND METHOD FOR PROVIDING A COMMUNICATION SERVICE**
KOMMUNIKATIONSNETZANORDNUNG UND VERFAHREN ZUR BEREITSTELLUNG EINES KOMMUNIKATIONSDIENSTES
AGENCEMENT DE RÉSEAU DE COMMUNICATION ET PROCÉDÉ DE FOURNITURE D'UN SERVICE DE COMMUNICATION

(43) Date of publication of application: 10.01.2024
(62) Divisional of application: 21172220.2
(73) Proprietor: NTT DOCOMO, INC., Tokyo 100-6150 (JP)
(72) Inventor: MUTIKAINEN, Jari, 80687 Munich (DE); GUERZONI, Riccardo, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- WO-A1-2020/178622
- CN-A- 109 600 802

## Description

The present disclosure relates to communication network arrangements and methods for providing a communication service.

A main feature of a mobile communication network is the ability to handle movement (i.e. mobility) of mobile terminals. In certain applications, the movement of a mobile terminal which uses a communication service may result in the desire or need to change the user plane components used for providing the communication service to the mobile terminal. This is in particular the case for communication services provided by Edge Computing (EC) since in Edge Computing, it is the aim to serve a mobile terminal with resources which are close to the mobile terminal. However, in certain applications, mobile terminals may be highly mobile while at the same time, it is very important to avoid packet loss (e.g. in communication for platooning of vehicles).

Therefore, approaches are desirable that allow a seamless user plane change, e.g. a user plane change with a low risk of packet loss.

WO 2020/178622 A1 discloses a system and method for providing session context storage during session re-establishment. Providing a Session Management Function (SMF) in a core network to enable storage and retrieval of User Equipment (UE) context data for a current Protocol Data Unit (PDU) includes determining that the current PDU session should be released and subsequently re-established, saving the UE context data maintained at the SMF for the current PDU session into a UE context database, and initiating a release of the current PDU session.

### Summary of the Invention

According to one aspect of the present invention, a communication network arrangement is provided including the features of claim 1. Additional features for advantageous embodiments of the present invention are provided in the dependent claims.

According to another aspect of the present invention, a method for providing a communication service according to claim 6 is provided. According to a further aspect of the present invention, a computer program and a computer readable medium according to claim 7 is provided.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- FIG. 1: shows a radio communication system 100, for example configured according to 5G (Fifth Generation) as specified by 3GPP (Third Generation Partnership Project), i.e. for example a 5GS.
- FIG. 2: illustrates a user plane (UP) change due to mobile terminal mobility.
- FIG. 3: shows a message flow diagram illustrating a change of session management function with a UP change.
- FIG. 4: shows a message flow diagram illustrating a transmission of UP configuration information via an Access and Mobility Management Function (AMF) in SSC (Session and Service Continuity) mode SCC#2.
- FIG. 5: shows a message flow diagram 500 illustrating a transmission of UP configuration information via the AMF in SSC (Session and Service Continuity) mode SCC#3.
- FIG. 6: shows a communication network arrangement of a communication network according to an embodiment.
- FIG. 7: shows a flow diagram illustrating a method for providing a communication service.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

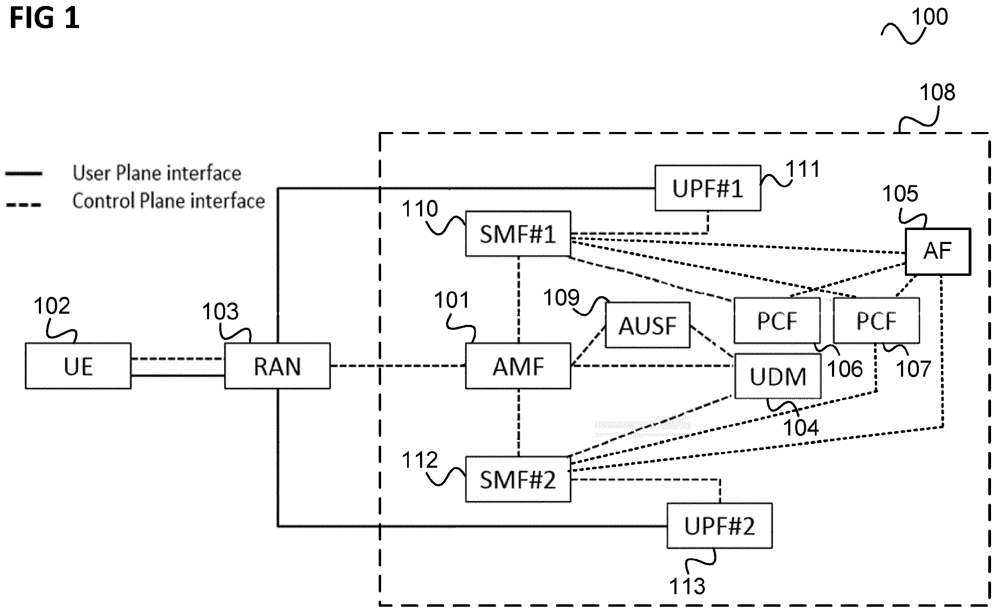

FIG. 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111 a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application.

In 3GPP Release 17 (Rel-17), AF influence is also used by the application layer to influence the URSP (UE Route Selection Policy) rules provided to the UE 102 to support application based on Edge Computing (EC).

In Edge Computing, in particular, it is desirable that computational resources stay close to a UE. Therefore, when the UE 102 has an established PDU session to use a communication service and moves, the UPF 111, 113 (and the PDU session) may change.

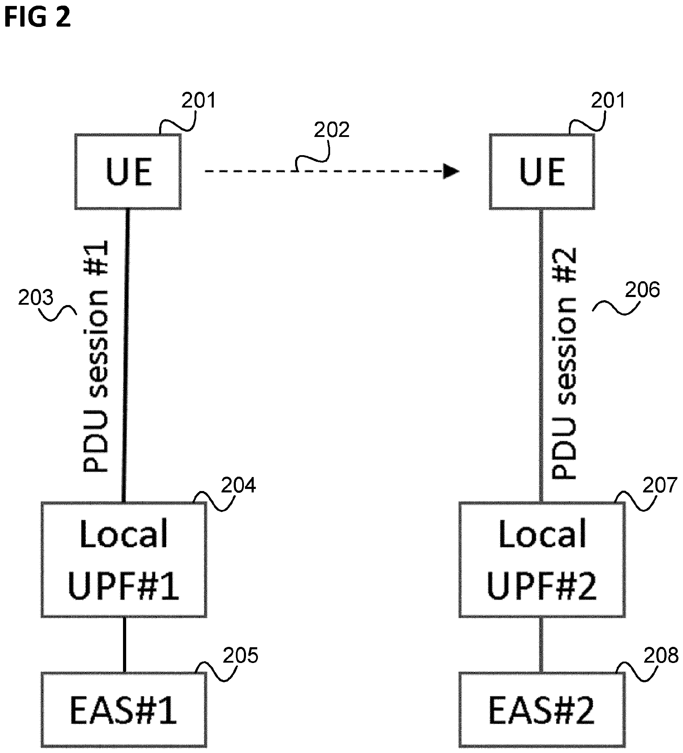

FIG. 2 illustrates a UP change due to mobile terminal mobility.

A UE 201 (e.g. corresponding to UE 102) moves from a first location to a second location as illustrated by arrow 202. In the first location, the UE has a first PDU session 203 by means of a first UPF 204, for example to communicate (via the first UPF 204) with a first Edge Application Server 205 to use a communication service.

The movement of the UE 201 to the second location triggers a UP change. This means that when the UE 201 has moved, the UE has a second PDU session 206 provided by a second UPF 207 to communicate (via the second UPF 207) with a second Edge Application server 208 to use the communication service.

The 5G technique SSC (Session and Service Continuity) allows the provider of the communication service to set a specific SSC mode for a given PDU Session, which in turn will determine the flow of packets across the network in mobility scenarios (like in the example of FIG. 2).

The SSC modes SSC#2 and SSC#3 apply to EC-based mission critical applications (e.g. automotive applications like platooning). The UE 201 can:
- In SSC#3: establish connectivity (i.e. the second PDU session 206) to the second UPF 207 before dropping the connectivity (i.e. the first PDU session 203) to the first UPF 204
- In SSC#2: establish connectivity (i.e. the second PDU session 206) to the second UPF 207 immediately after dropping the connectivity (i.e. the first PDU session 203) to the first UPF 204.

During a user plane change (i.e. a change of UPFs 111, 113 as in FIG. 2), the SMF 110, 112 managing the PDU sessions 203, 206 exchanges notifications with the AF 105 and stores information provided by the AF to synchronize a UP change in the 5GS (e.g. in case of a EAS (Edge Application Server) relocation at the application layer as illustrated in FIG. 2).

However, in SSC modes SSC#2 and SSC#3, the SMF may also change with the UP change. For example, the respective AMF 101 may select a new SMF.

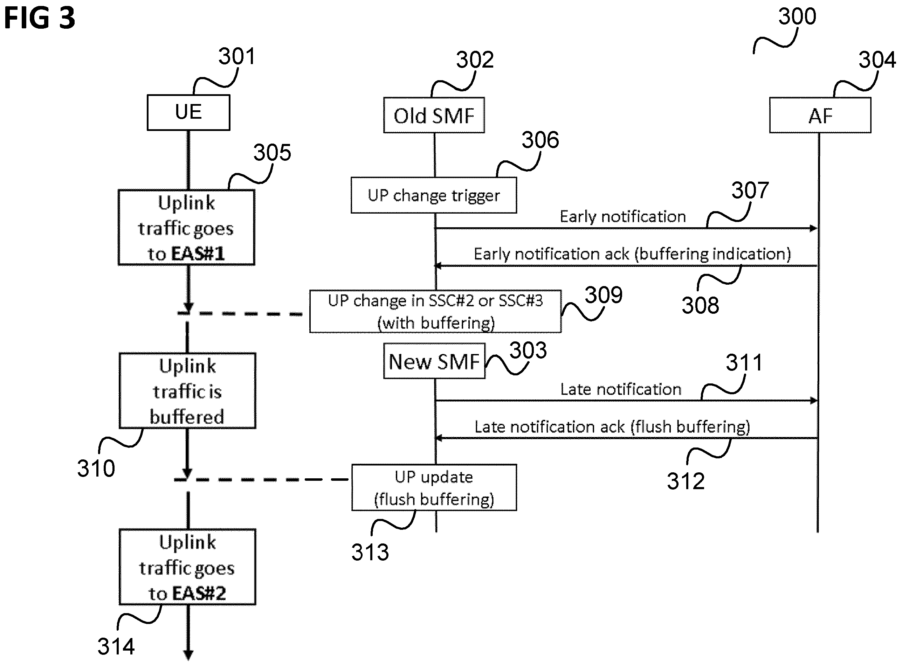

FIG. 3 shows a message flow diagram 300 illustrating a change of SMF with a UP change.

A UE 301, e.g. corresponding to UE 201, a first SMF 302, a second SMF 303 and an AF 304 are involved in the flow.

The UE 301 generates uplink traffic, which, before the UP change, goes, in 305, to the first Edge Application Server 205. When there is a trigger for a change of UP in 306, the first SMF 302 sends, in 307, an early notification (e.g. an NsmfEventExposureNotification) to the AF 304.

In 308, the AF 304 responds with an early notification acknowledgement, in which, in this example, it indicates that uplink data should be buffered (because the second Edge Application Server 208 might not be immediately ready to receive the uplink data after the UP change).

In 309, the first SMF 302 performs the UP change. This in particular includes that it initiates that the uplink traffic is buffered in 310 (in the second UPF 207, i.e. the target UPF 207).

It is assumed that the SMF changes with the UP change. This means that the second PDU session 206 is managed by the second SMF 303.

In 311, the second SMF 303 sends a late notification to the AF 304 to inform the AF 304 that the UP change has been completed and in 312, the AF 304 acknowledges and instructs the second SMF 303 to initiate that the buffer is flushed and buffering is stopped.

In 313, the second SMF 303 updates the user plane accordingly to flush the buffer and stop buffering.

Accordingly, in 314, the uplink traffic goes through the second UPF 208 to the second Edge Application Server 208.

According to various embodiments, it is ensured that the second SMF 303 has the necessary information to carry out (or complete) a UP change with a change of SMFs as in the example of FIG. 3 (and as it may occur for SSC modes SSC#2 and SSC#3). This kind of information is herein referred to as UP configuration information and may at least in part be information provided by the AF 304.

In particular, it is ensured that the UP configuration information provided by the AF 304 to the first SMF 302 in 308 is transferred from the first SMF 302 to the second SMF 303.

This allows features to support EC (e.g. buffering in the target UPF as in the example of FIG. 3) to work in SSC modes SSC#2 and SSC#3. For example, the UP configuration information includes the information that the AF 304 has instructed that buffering is to be performed allowing the second SMF 303 to act accordingly. This in particular allows avoiding packet loss which is important for support of applications that require low packet loss such as mission critical automotive applications (e.g. platooning) or industrial applications (e.g. stop button for machinery).

According to various embodiments, the first SMF 302 transfers the UP configuration information to the AMF 101 before the UP change and the AMF 101 then transfers the UP configuration information to the second SMF 303.

Alternatively, the first SMF 302 transfers the UP configuration information to the UE 301 before the UP change and the UE 301 then transfers the UP configuration information to the second SMF 303.

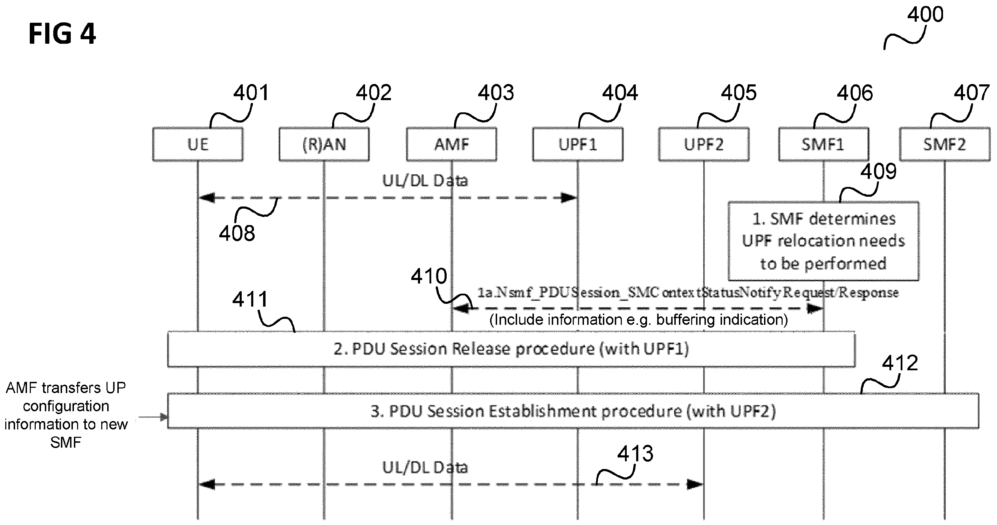

FIG. 4 shows a message flow diagram 400 illustrating a transmission of UP configuration information via the AMF in SSC mode SCC#2.

The message flow takes place between a UE 401, e.g. corresponding to UE 301, a RAN 402, an AMF 403, a first UPF 404, a second UPF 405, a first SMF 406 (e.g. corresponding to the first SMF 302) and a second SMF (target SMF) 407 (e.g. corresponding to second SMF 303).

Before the UP change, the UE 401 exchanges uplink and downlink data with the first UPF 404 in 408. This is done by a first PDU session which is managed by the first SMF 405.

It is assumed that in 409, the first SMF 405 determines that a UPF relocation (e.g. a UP change) should be performed.

Accordingly, in 410, the first SMF 406 sends a Nsmf_PDUSession_SMContextNotifyRequest message to the AMF 403 to inform the AMF 403 that the first PDU Session is going to be released and the AMF 403 acknowledges with a Nsmf_PDUSession_SMContextNotifyResponse message.

In 411, the first PDU session is released.

In 412, a second PDU session is established. The second PDU session is provided by the second UPF 405 to the UE 401.

In 413, the UE 401 starts exchanging uplink and downlink data with the second UPF 405 via the second PDU session.

As explained, as part of 412, the AMF 403 may select a new SMF, in this example the second SMF 407, for managing the second PDU session and UP configuration information is passed to the second SMF 407. The UP configuration information for example includes the information
- whether a buffering indication was received by the first SMF 406 (from a respective AF);
- whether the first SMF 406 has sent an early notification (to the AF)
- the source DNAI (Data Network Access Identifier) from which the UE 401 is moving to the target DNAI.

For passing the UP configuration information to the second SMF 407, the first SMF 406 includes the UP configuration information into the Nsmf_PDUSession_SMContextNotifyRequest message to the AMF 403 in 410.

The AMF 403 may then communicate the UP configuration information to the second SMF 406 in 412, for example by including it into a Nsmf_PDUSession_CreateSMContext Request message that it sends to the second SMF 406 to request establishment of the second PDU session.

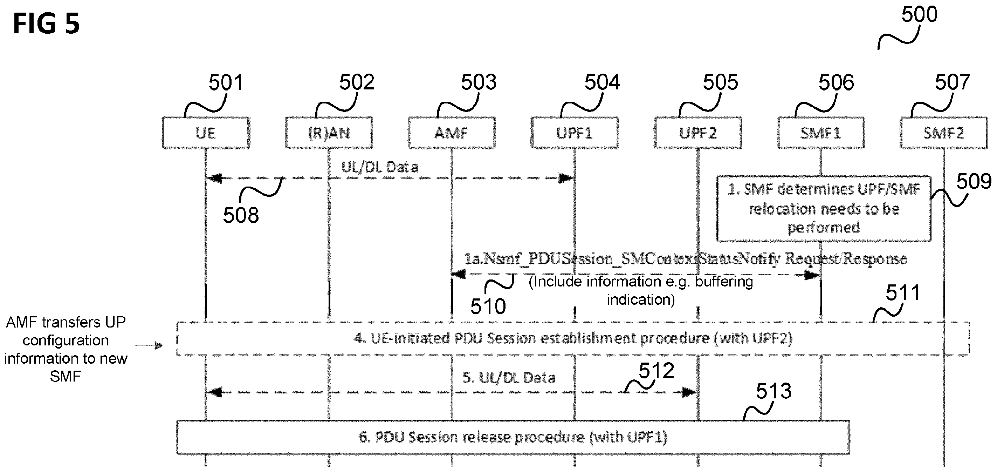

FIG. 5 shows a message flow diagram 500 illustrating a transmission of UP configuration information via the AMF in SSC mode SCC#3.

The message flow takes place between a UE 501, e.g. corresponding to UE 301, a RAN 502, an AMF 503, a first UPF 504, a second UPF 505, a first SMF 506 (e.g. corresponding to the first SMF 302) and a second SMF (target SMF) 507 (e.g. corresponding to second SMF 303).

Before the UP change, the UE 501 exchanges uplink and downlink data with the first UPF 504 in 508. This is done by a first PDU session which is managed by the first SMF 505.

It is assumed that in 509, the first SMF 505 determines that a UPF relocation (e.g. a UP change) should be performed.

Accordingly, in 510, the first SMF 506 sends a Nsmf_PDUSession_SMContextNotifyRequest message to the AMF 503 to inform the AMF 503 that the first PDU Session is going to be released and the AMF 503 acknowledges with a Nsmf_PDUSession_SMContextNotifyResponse message.

In 511, a second PDU session is established. The second PDU session is provided by the second UPF 505 to the UE 501.

In 512, the UE 501 starts exchanging uplink and downlink data with the second UPF 505 via the second PDU session.

In 513, the first PDU session is released.

As explained, as part of 511, the AMF 503 may select a new SMF, in this example the second SMF 507, for managing the second PDU session and UP configuration information is passed to the second SMF 507.

For passing the UP configuration information to the second SMF 507, the first SMF 506 includes the UP configuration information into the Nsmf_PDUSession_SMContextNotifyRequest message to the AMF 503 in 510.

The AMF 503 may then communicate the UP configuration information to the second SMF 506 in 511, for example by including it into a Nsmf_PDUSession_CreateSMContext Request message that it sends to the second SMF 506 to request establishment of the second PDU session.

Alternatively to the information transfer via the AMF 403 in SSC mode SSC#2, the first SMF 406 may include the UP configuration information into a PDU Session Release Command and send it to UE 401 (via the AMF 403, e.g. between 410 and 411). The UE 401 may then include the UP configuration information when establishing the second PDU session to the second SMF 407 in 412.

Alternatively to the information transfer via the AMF 503 in SSC mode SSC#3, the first SMF 506 may include the UP configuration information into a PDU Session Modification Command and send it to UE 501 (via the AMF 503, e.g. between 510 and 511). The UE 501 may then include the UP configuration information when establishing the second PDU session to the second SMF 507 in 511.

According to another embodiment, the first SMF 406, 506 stores the UP configuration information in a persistent storage location, which remains available also after the first PDU session has been released. The first SMF 406, 506 may then send to the AMF 403, 503 an identifier of the storage location from where the second SMF 407, 507 can get the UP configuration information stored by the first SMF 406, 506. During the establishment of the second PDU session (in 412 or 511), the AMF 403, 503 provides the identifier of the storage location to the second SMF 407, 507. The second SMF 407, 507 then retrieves the UP configuration information from the storage location. This approach may in particular be used in SSC mode SSC#2.

For SSC mode SSC#3, the first SMF 506 may also send to the AMF 503 an identifier of the first SMF 506 from where the second SMF 507 can get the UP configuration information (stored by the first SMF 506). The identifier of the first SMF 506 may be an identifier of a Session Management Context stored in the first SMF 506, the Session Management Context including at least one AF coordination information (e.g. whether a buffering indication was received by the first SMF 506). During the establishment of the second PDU session (in 511), the AMF 503 provides the identifier to the second SMF 507. The second SMF 507 then retrieves the UP configuration information from the first SMF 506. This approach may in particular be used in SSC mode SSC#3.

The UP configuration information (that should or needs to be transferred from the source SMF to the target SMF) for example includes
- Notification URI (of the AF) and correlation ID (in case the PCF also changes)
- The following information (per Notification correlation ID):
   - The source DNAI
   - UE source DNAI IP address
   - Indication that an early notification has been sent
   - Indication that a buffering indication was received
   - Indication that a PCF change event is required (in case the PCF also has changed)

The Notification correlation ID is an identifier of the notification from the SMF to the AF; the AF includes it when sending a message to the SMF related to that notification.

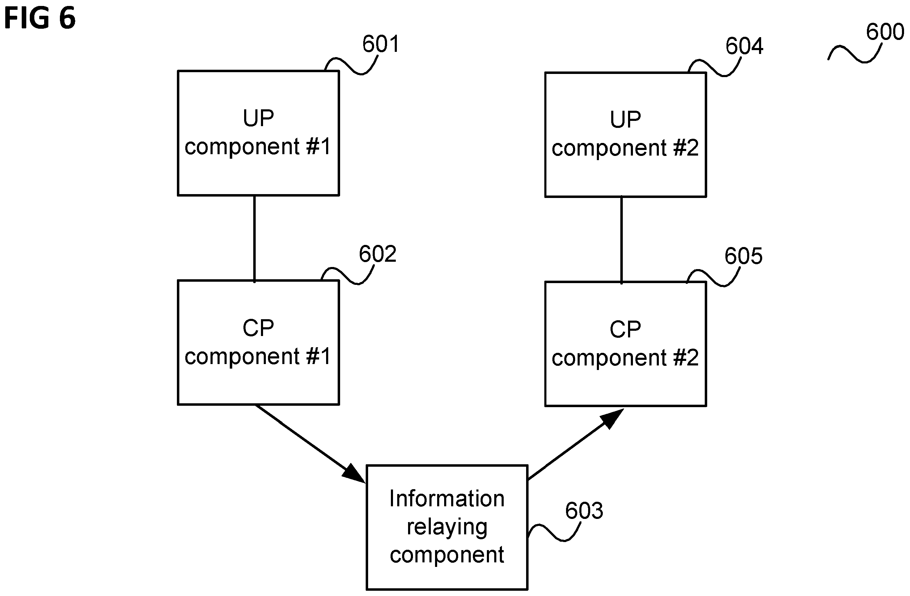

In summary, according to various embodiments, a communication network arrangement is provided as illustrated in FIG. 6.

FIG. 6 shows a communication network arrangement 600 of a communication network according to an embodiment.

The communication network arrangement 600 includes a first user plane component 601 configured to provide a first communication session for a communication service used by a mobile terminal and a first control plane component 602 configured to manage the first communication session and configured to, upon a trigger for a user plane change for the communication service, transmit user plane configuration information to an information relaying component 603, wherein the user plane configuration information includes information about the provision of the communication service before the user plane change.

The communication network arrangement 600 further includes a second user plane component 604 configured to (in reaction or in response to the trigger for the user plane change) provide a second communication session for the communication service and a second control plane component 605 configured to manage the second communication session and configured to receive (e.g. obtain or retrieve) the user plane configuration information from the information relaying component 603.

According to various embodiments, in other words, a control plane component (or entity or function) which manages a communication session for providing a communication service for a mobile terminal uses a middle entity to relay information to a target control plane component which manages a (new) communication session for providing the communication service to the mobile terminal. The information is for example information the target control plane component needs to know to be able to continue the communication service (at least without impact on the quality, e.g. without packet loss) after the user plane change (i.e., in other words, to complete the user plane change successfully). For example, the provision of the communication service involves a transaction with an application function (i.e. generally a component which requests a certain quality policy for the communication service) and the information is information required to complete the transaction with the application function or information to complete the user plane change.

The user plane (UP) configuration information is information about the provision of the communication service before the user plane change, i.e. about the provision of the communication service by means of the first communication session, e.g. information communicated between the first control plane component with the application function (generally the component which requests a certain quality policy for the communication service) or information about the source DNAI (Data Network Access Identifier), i.e. the DNAI that was used for the provision of the communication service before the UP change or whether the PCF (generally policy control component) which controlled the policy for the communication service before the UP change was a different one than the PCF which controls the policy for the communication service after the UP change.

The communication service is for example a communication service where packet loss should be avoided, e.g. a communication service for exchanging control data for robotic devices or machinery, e.g. for platooning of vehicles or controlling industrial machines. It may be a communication service provided Edge Computing (EC), i.e. one or more EASs (Edge Application Servers). The trigger for the user plane change may be a change of location of the mobile terminal (which may in particular result in a change of EAS providing the communication service).

The information relaying component may be part of the communication network arrangement and may be configured to transmit the user plane configuration information to the second control plane component. The information relaying component may for example be configured to (actively) provide the user plane configuration information to the second control plane component.

The user plane configuration information may for example includes communication session management information for continuation of the communication service by means of a different communication session.

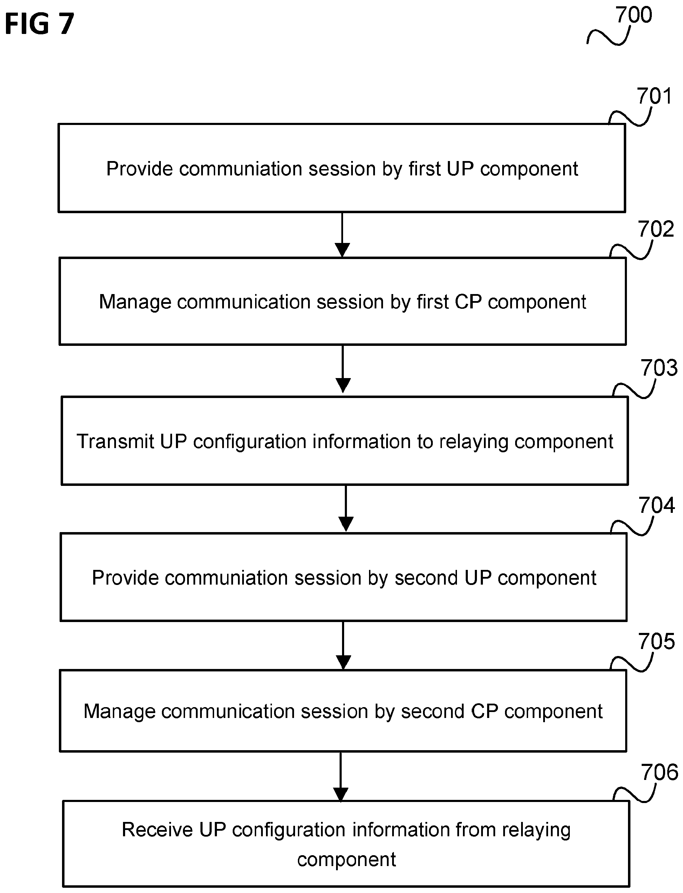

A communication network (or system) for example carries out a method as illustrated in FIG. 7.

FIG. 7 shows a flow diagram 700 illustrating a method for providing a communication service.

In 701, a first communication session is provided by a first user plane component for a communication service used by a mobile terminal.

In 702, the first communication session is managed by a first control plane component.

In 703, upon a trigger for a user plane change for the communication service, user plane configuration information is transmitted from the first control plane component to an information relaying component, wherein the user plane configuration information includes information about the provision of the communication service before the user plane change.

In 704, a second communication session is provided by a second user plane component for the communication service.

In 705, the second communication session is managed by a second control plane component.

In 706, the second control plane component receives the user plane configuration information from the information relaying component.

It should be noted that the operations of the method of FIG. 7 do not need to be performed strictly in the order shown. In particular, a session is managed while it is provided and both sessions may be provided (and managed) in parallel (e.g. shortly after the user plane change).

The components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the scope of protection as defined by the appended claims.

## Claims

1. A communication network arrangement (100) of a communication network comprising:
a first user plane component (111, 204, 601) configured to provide a first communication session (203) for a communication service used by a mobile terminal (102, 201, 301);
a first control plane component (110, 602) configured to manage the first communication session (203) and configured to, upon a trigger for a user plane change for the communication service, transmit user plane configuration information to an information relaying component (101, 603);
a quality policy requesting component (105, 304) configured to transmit to the first control plane component (110, 602) at least a part of the user plane configuration information to be transmitted by the first control plane component (110, 602), wherein said at least a part of the user plane configuration information includes a buffering indication;
a second user plane component (113, 207, 604) configured to provide a second communication session (206) for the communication service; and
a second control plane component (112, 605) configured to manage the second communication session (206) and configured to receive the user plane configuration information from the information relaying component (101, 603);
wherein the first control plane component (110, 602) and the second control plane component (112, 605) are session management functions, SMF (110, 112, 302, 303, 406, 407, 506, 507);
wherein the information relaying component (101, 603) is a third control plane component configured to request the establishment of the second communication session (206, 412, 511) and configured to include the user plane configuration information in the request for establishment of the second communication session (412, 511) transmitted to the second control plane component (112, 303, 407, 507, 605),
wherein the user plane configuration information includes:
information about the provision of the communication service before the user plane change; and
the buffering indication indicating that uplink traffic should be buffered by the second user plane component (113, 207, 604) until a receiver (208) to which the uplink traffic goes through the second user plane component (113, 207, 604) is ready to receive the uplink traffic (314).

2. The communication network arrangement (100) of claim 1, wherein the second control plane component (112, 303, 407, 507, 605) is configured to control the second user plane component (113, 207, 604) according to the user plane configuration information.

3. The communication network arrangement (100) of claim 1 or 2, wherein the quality policy requesting component (105, 304) is configured to request support of a quality of service policy for the communication service (106, 107).

4. The communication network arrangement (100) of any one of claims 1 to 3, wherein the quality policy requesting component (105, 304) is an application function, AF (105, 304).

5. The communication network arrangement (100) of claim 1, wherein the information relaying component (101, 603) is an Access and Mobility Management Function, AMF (101) serving the mobile terminal (102, 201, 301).

6. A method (700) for providing a communication service comprising:
providing a first communication session (203) for a communication service used by a mobile terminal (102, 201, 301) by a first user plane component (111, 204, 601);
managing the first communication session (203) by a first control plane component (110, 602);
upon a trigger for a user plane change for the communication service, transmitting user plane configuration information from the first control plane component (110, 602) to an information relaying component (101, 603);
transmitting by a quality policy requesting component (105, 304) to the first control plane component at least a part of the user plane configuration information to be transmitted by the first control plane component (110, 602), wherein said at least a part of the user plane configuration information includes a buffering indication;
providing a second communication session (206) for the communication service by a second user plane component (113, 207, 604);
managing the second communication session (206) by a second control plane component (112, 605); and
receiving, by the second control plane component (112, 605), the user plane configuration information from the information relaying component (101, 603);
wherein the first control plane component (110, 602) and the second control plane component (112, 605) are session management functions, SMF (110, 112, 302, 303, 406, 407, 506, 507);
wherein the information relaying component (101, 603) is a third control plane component (101) configured to request establishment of the second communication session (206, 412, 511) and configured to include the user plane configuration information in the request for establishment of the second communication session (206, 412, 511) transmitted to the second control plane component (112, 407, 507, 605);
wherein the user plane configuration information includes:
information about the provision of the communication service before the user plane change; and
the buffering indication, indicating that uplink traffic should be buffered by the second user plane component (113, 207, 604) until a receiver (208) to which the uplink traffic goes through the second user plane component (113, 207, 604) is ready to receive the uplink traffic (314).

7. A computer program and a computer readable medium including instructions, which, when executed by a computer, make the computer perform the method of claim 6.

## Patentansprüche

1. Eine Kommunikationsnetzwerk-Anordnung (100) eines Kommunikationsnetzwerks, aufweisend:
eine erste Benutzerebene-Komponente (111, 204, 601), die so eingerichtet ist, dass sie eine erste Kommunikationssitzung (203) für einen Kommunikationsdienst bereitstellt, der von einem mobilen Endgerät (102, 201, 301) genutzt wird;
eine erste Steuerebene-Komponente (110, 602), die so eingerichtet ist, dass sie die erste Kommunikationssitzung (203) verwaltet und so eingerichtet ist, dass sie bei einem Auslöser für eine Änderung der Benutzerebene für den Kommunikationsdienst Benutzerebene-Konfigurationsinformationen an eine Informationsweiterleitungskomponente (101, 603) überträgt;
eine Qualitätsrichtlinien-Anforderungskomponente (105, 304), die so eingerichtet ist, dass sie mindestens einen Teil der von der ersten Steuerebene-Komponente (110, 602) zu übertragenden Benutzerebene-Konfigurationsinformationen an die erste Steuerebene-Komponente (110, 602) überträgt, wobei der mindestens eine Teil der Benutzerebene-Konfigurationsinformationen eine Pufferangabe enthält;
eine zweite Benutzerebene-Komponente (113, 207, 604), die so eingerichtet ist, dass sie eine zweite Kommunikationssitzung (206) für den Kommunikationsdienst bereitstellt; und
eine zweite Steuerebene-Komponente (112, 605), die so eingerichtet ist, dass sie die zweite Kommunikationssitzung (206) verwaltet und so eingerichtet ist, dass sie die Benutzerebene-Konfigurationsinformationen von der Informationsweiterleitungskomponente (101, 603) empfängt;
wobei die erste Steuerebene-Komponente (110, 602) und die zweite Steuerebene-Komponente (112, 605) Sitzungsverwaltungsfunktionen SMF (110, 112, 302, 303, 406, 407, 506, 507) sind;
wobei die Informationsweiterleitungskomponente (101, 603) eine dritte Steuerebene-Komponente ist, die so eingerichtet ist, dass sie den Aufbau der zweiten Kommunikationssitzung (206, 412, 511) anfordert und so eingerichtet ist, dass sie die Benutzerebene-Konfigurationsinformationen in die Anforderung zum Aufbau der zweiten Kommunikationssitzung (412, 511) einfügt, die an die zweite Steuerebene-Komponente (112, 303, 407, 507, 605) gesendet wird,
wobei die Benutzerebene-Konfigurationsinformationen enthalten:
Informationen über die Bereitstellung des Kommunikationsdienstes vor der Änderung der Benutzer-Ebene; und
die Pufferangabe, die angibt, dass der Uplink-Verkehr von der zweiten Benutzerebene-Komponente (113, 207, 604) gepuffert werden soll, bis ein Empfänger (208), an den der Uplink-Verkehr über die zweite Benutzerebene-Komponente (113, 207, 604) geht, bereit ist, den Uplink-Verkehr (314) zu empfangen.

2. Die Kommunikationsnetzwerk-Anordnung (100) nach Anspruch 1, wobei die zweite Steuerebene-Komponente (112, 303, 407, 507, 605) so eingerichtet ist, dass sie die zweite Benutzerebene-Komponente (113, 207, 604) gemäß den Benutzerebene-Konfigurationsinformationen steuert.

3. Die Kommunikationsnetzwerk-Anordnung (100) nach Anspruch 1 oder 2, wobei die Qualitätsrichtlinien-Anforderungskomponente (105, 304) so eingerichtet ist, dass sie die Unterstützung einer Dienstgüterichtlinie für den Kommunikationsdienst (106, 107) anfordert.

4. Die Kommunikationsnetzwerk-Anordnung (100) nach irgendeinem der Ansprüche 1 bis 3, wobei die Qualitätsrichtlinien-Anforderungskomponente (105, 304) eine Anwendungsfunktion AF (105, 304) ist.

5. Die Kommunikationsnetzwerk-Anordnung (100) nach Anspruch 1, wobei die Informationsweiterleitungskomponente (101, 603) eine Zugangs- und Mobilitätsverwaltungsfunktion (AMF) (101) ist, die den mobilen Anschluss (102, 201, 301) bedient.

6. Ein Verfahren (700) zum Bereitstellen eines Kommunikationsdienstes, aufweisend:
Bereitstellen einer ersten Kommunikationssitzung (203) für einen von einem mobilen Endgerät (102, 201, 301) verwendeten Kommunikationsdienst durch eine erste Benutzerebene-Komponente (111, 204, 601);
Verwalten der ersten Kommunikationssitzung (203) durch eine erste Steuerebene-Komponente (110, 602);
bei einem Auslöser für eine Änderung der Benutzerebene für den Kommunikationsdienst, Übertragen von Benutzerebene-Konfigurationsinformationen von der ersten Steuerebene-Komponente (110, 602) an eine Informationsweiterleitungskomponente (101, 603);
Übertragen mindestens eines Teils der von der ersten Steuerebene-Komponente (110, 602) zu übertragenden Benutzerebene-Konfigurationsinformationen durch eine Qualitätsrichtlinien-Anforderungskomponente (105, 304) an die erste Steuerebene-Komponente, wobei der mindestens eine Teil der Benutzerebene-Konfigurationsinformationen eine Pufferangabe enthält;
Bereitstellen einer zweiten Kommunikationssitzung (206) für den Kommunikationsdienst durch eine zweite Benutzerebene-Komponente (113, 207, 604);
Verwalten der zweiten Kommunikationssitzung (206) durch eine zweite Steuerebene-Komponente (112, 605); und
Empfangen der Benutzerebene-Konfigurationsinformationen durch die zweite Steuerebene-Komponente (112, 605) von der Informationsweiterleitungskomponente (101, 603);
wobei die erste Steuerebene-Komponente (110, 602) und die zweite Steuerebene-Komponente (112, 605) Sitzungsverwaltungsfunktionen SMF (110, 112, 302, 303, 406, 407, 506, 507) sind;
wobei die Informationsweiterleitungskomponente (101, 603) eine dritte Steuerebene-Komponente (101) ist, die so eingerichtet ist, dass sie den Aufbau der zweiten Kommunikationssitzung (206, 412, 511) anfordert und so eingerichtet ist, dass sie die Benutzerebene-Konfigurationsinformationen in die Anforderung zum Aufbau der zweiten Kommunikationssitzung (206, 412, 511) einfügt, die an die zweite Steuerebene-Komponente (112, 407, 507, 605) gesendet wird;
wobei die Benutzerebene-Konfigurationsinformationen enthalten:
Informationen über die Bereitstellung des Kommunikationsdienstes vor der Änderung der Benutzer-Ebene; und
die Pufferangabe, die angibt, dass der Uplink-Verkehr von der zweiten Benutzerebene-Komponente (113, 207, 604) gepuffert werden soll, bis ein Empfänger (208), an den der Uplink-Verkehr durch die zweite Benutzerebene-Komponente (113, 207, 604) geht, bereit ist, den Uplink-Verkehr (314) zu empfangen.

7. Ein Computerprogramm und ein computerlesbares Medium, das Anweisungen enthält, die, wenn sie von einem Computer ausgeführt werden, den Computer dazu veranlassen, das Verfahren nach Anspruch 6 auszuführen.

## Revendications

1. Agencement de réseau de communication (100) d'un réseau de communication, comprenant :
un premier composant de plan utilisateur (111, 204, 601) configuré pour fournir une première session de communication (203) pour un service de communication utilisé par un terminal mobile (102, 201, 301) ;
un premier composant de plan de contrôle (110, 602) configuré pour gérer la première session de communication (203) et configuré pour, lors d'un déclenchement d'un changement de plan utilisateur pour le service de communication, transmettre des informations de configuration de plan utilisateur à un composant de relais d'informations (101, 603) ;
un composant de demande de politique de qualité (105, 304) configuré pour transmettre au premier composant de plan de contrôle (110, 602) au moins une partie des informations de configuration de plan utilisateur à transmettre par le premier composant de plan de contrôle (110, 602), dans lequel ladite au moins une partie des informations de configuration de plan utilisateur comprend une indication de mise en mémoire tampon ;
un deuxième composant de plan utilisateur (113, 207, 604) configuré pour fournir une deuxième session de communication (206) pour le service de communication ; et
un deuxième composant de plan de contrôle (112, 605) configuré pour gérer la deuxième session de communication (206) et configuré pour recevoir les informations de configuration du plan utilisateur provenant du composant de relais d'informations (101, 603) ;
dans lequel le premier composant de plan de contrôle (110, 602) et le deuxième composant de plan de contrôle (112, 605) sont des fonctions de gestion de session, SMF (110, 112, 302, 303, 406, 407, 506, 507) ;
dans lequel le composant de relais d'informations (101, 603) est un troisième composant de plan de contrôle configuré pour demander l'établissement de la deuxième session de communication (206, 412, 511) et configuré pour inclure les informations de configuration de plan utilisateur dans la demande d'établissement de la deuxième session de communication (412, 511) transmise au deuxième composant de plan de contrôle (112, 303, 407, 507, 605),
dans lequel les informations de configuration de plan utilisateur comprennent :
des informations sur la fourniture du service de communication avant le changement de plan utilisateur ; et
l'indication de mise en mémoire tampon indiquant que le trafic de liaison montante doit être mis en mémoire tampon par le deuxième composant de plan utilisateur (113, 207, 604) jusqu'à ce qu'un récepteur (208) vers lequel le trafic de liaison montante passe par le deuxième composant de plan utilisateur (113, 207, 604) soit prêt à recevoir le trafic de liaison montante (314).

2. Agencement de réseau de communication (100) selon la revendication 1, dans lequel le deuxième composant de plan de contrôle (112, 303, 407, 507, 605) est configuré pour contrôler le deuxième composant de plan utilisateur (113, 207, 604) en fonction des informations de configuration de plan utilisateur.

3. Agencement de réseau de communication (100) selon la revendication 1 ou 2, dans lequel le composant de demande de politique de qualité (105, 304) est configuré pour demander le support d'une politique de qualité de service pour le service de communication (106, 107).

4. Agencement de réseau de communication (100) selon l'une quelconque des revendications 1 à 3, dans lequel le composant de demande de politique de qualité (105, 304) est une fonction d'application, AF (105, 304).

5. Agencement de réseau de communication (100) selon la revendication 1, dans lequel le composant de relais d'informations (101, 603) est une fonction de gestion d'accès et de mobilité, AMF (101), desservant le terminal mobile (102, 201, 301).

6. Procédé (700) pour fournir un service de communication, comprenant :
la fourniture d'une première session de communication (203) pour un service de communication utilisé par un terminal mobile (102, 201, 301) par un premier composant de plan utilisateur (111, 204, 601) ;
la gestion de la première session de communication (203) par un premier composant de plan de contrôle (110, 602) ;
lors d'un déclenchement d'un changement de plan utilisateur pour le service de communication, la transmission d'informations de configuration de plan utilisateur depuis le premier composant de plan de contrôle (110, 602) vers un composant de relais d'informations (101, 603) ;
la transmission par un composant de demande de politique de qualité (105, 304) au premier composant de plan de contrôle au moins une partie des informations de configuration de plan utilisateur à transmettre par le premier composant de plan de contrôle (110, 602), dans lequel ladite au moins une partie des informations de configuration de plan utilisateur comprend une indication de mise en mémoire tampon ;
la fourniture d'une deuxième session de communication (206) pour le service de communication par un deuxième composant de plan utilisateur (113, 207, 604) ;
la gestion de la deuxième session de communication (206) par un deuxième composant de plan de contrôle (112, 605) ; et
la réception, par le deuxième composant de plan de contrôle (112, 605), des informations de configuration de plan utilisateur provenant du composant de relais d'informations (101, 603) ;
dans lequel le premier composant de plan de contrôle (110, 602) et le deuxième composant de plan de contrôle (112, 605) sont des fonctions de gestion de session, SMF (110, 112, 302, 303, 406, 407, 506, 507) ;
dans lequel le composant de relais d'informations (101, 603) est un troisième composant de plan de contrôle (101) configuré pour demander l'établissement de la deuxième session de communication (206, 412, 511) et configuré pour inclure les informations de configuration de plan utilisateur dans la demande d'établissement de la deuxième session de communication (206, 412, 511) transmise au deuxième composant de plan de contrôle (112, 407, 507, 605) ;
dans lequel les informations de configuration de plan utilisateur comprennent :
des informations sur la fourniture du service de communication avant le changement de plan utilisateur ; et
l'indication de mise en mémoire tampon, indiquant que le trafic de liaison montante doit être mis en mémoire tampon par le deuxième composant de plan utilisateur (113, 207, 604) jusqu'à ce qu'un récepteur (208) vers lequel le trafic de liaison montante passe par le deuxième composant de plan utilisateur (113, 207, 604) soit prêt à recevoir le trafic de liaison montante (314).

7. Programme informatique et support lisible par ordinateur comprenant des instructions qui, lorsqu'elles sont exécutées par un ordinateur, font que l'ordinateur exécute le procédé selon la revendication 6.
